# EUROPEAN PATENT SPECIFICATION

(11) **EP 2 824 744 B1**
(45) Date of publication and mention of the grant of the patent: **07.09.2016**
(21) Application number: 13176144.7
(22) Date of filing: 11.07.2013
(51) Int. Cl.: H01M 8/06, H01M 8/04, H01M 8/10

(54) **Fuel cell system, method for operating a fuel cell and vehicle with such a fuel cell system**
Brennstoffzellensystem, Verfahren zum Betreiben einer Brennstoffzelle und Fahrzeug mit einem solchen Brennstoffzellensystem
Système de pile à combustible, procédé pour faire fonctionner une pile à combustible et véhicule équipé d'un tel système de pile à combustible

(43) Date of publication of application: 14.01.2015
(73) Proprietor: Airbus Operations GmbH, 21129 Hamburg (DE)
(72) Inventor: Hoffjann, Claus, 21147 Hamburg (DE); Kurre, Jens-Dietrich, 21244 Buchholz (DE)
(74) Representative: Kopf Westenberger Wachenhausen Patentanwälte PartG mbB

(56) References cited:
- EP-A1- 0 878 859
- WO-A1-2007/057188
- WO-A2-2006/058774
- DE-A1-102008 034 420
- US-A1- 2002 004 157
- US-A1- 2003 233 936
- US-A1- 2008 160 387
- US-A1- 2008 168 798
- US-A1- 2008 202 774

## Description

### TECHNICAL FIELD

The invention relates to a fuel cell system, a method for operating a fuel cell and a vehicle with such a fuel cell system.

### BACKGROUND TO THE INVENTION

The use of fuel cells in vehicles for providing a plurality of different tasks, such as supplying electrical energy, water, nitrogen-enriched air and heat is a known approach to provide an improved fuel efficiency and a decreased noise emanation. Especially, the use of fuel cells in aircraft has a great potential for clearly reducing the fuel consumption and in replacing auxiliary power units based on gas turbine engines.

In conventional general-purpose fuel cell systems in aircraft, which are not directed to the generation of electrical power in emergency situations, air and hydrogen are used as oxidant and fuel. While hydrogen is fed to the anode and air is fed to the cathode the fuel cell process takes place, during which the oxygen content of the air reacts with the hydrogen, such that the air is oxygen depleted when it leaves the anode. As a reaction product, water generated during the fuel cell process exits the fuel cell as water vapor contained in the oxygen depleted air. According to a concept for improving the overall efficiency of the aircraft the water vapor is condensed and extracted from the fuel cell exhaust for further use in other aircraft systems, e.g. in lavatories, galleys or for spraying into ram air ducts or turbojet engines. For compensating the vaporization enthalpy the condensation of the water vapor requires a cooling capacity that directly increases with the electrical power generated by the fuel cell system, which is directly responsible for the amount of generated water.

In modem aircraft with a tendency to operate more and more system electrically the requirement for electrical power to be generated on board the aircraft increases. If a majority of the electrical power is to be provided by the fuel cell system the amount of water vapor and, consequently, the cooling capacity requirement increases. Consequently, the installation space for providing cooling devices increases, too.

### SUMMARY OF THE INVENTION

It may be advantageous to increase the providable electrical power and, at the same time, to reduce the required cooling capacity for using the water arising during the fuel cell process of the fuel cell system. It therefore may be an object of the invention to provide a compact fuel cell system that is capable of providing electrical power, oxygen depleted air and water to various systems in an aircraft while at the same time the cooling requirements for the condensation of water is reduced to a minimum even if the electrical power is generated in a rather large scale.

This object may be met by a fuel cell system comprising the features according to claim 1. Advantageous embodiments and improvements may be gathered from the sub-claims and the following description.

A fuel cell system is proposed, comprising an air inlet, a hydrogen inlet, an inert gas outlet, a water outlet, an electrical power outlet, at least one low temperature fuel cell and at least one air separator, wherein the air separator is positioned between the air inlet and a cathode of the at least one fuel cell, wherein the air separator is adapted for separating oxygen from the air and feeding the oxygen to a cathode of the at least one fuel cell.

The fuel cell system is to be understood as a compact device with a number of ports for integration into the vehicle. The at least one fuel cell may be realized as exactly one fuel cell or, preferably, as a number of fuel cells organized to a stack with parallel and/or serial electrical connections. A low temperature fuel cell may preferably comprise a PEM fuel cell, which may have an operation temperature of clearly below 100 °C leading to the ability to provide water as a reaction product in a liquid form.

The at least one air separator may theoretically exemplarily be realized as an onboard oxygen generation system (OBOGS) or as an onboard inert gas generation system (OBIGGS).

In an OBOGS, the air separation may be conducted by a molecular sieve material, for example comprising a zeolithe material, through which air passes. The zeolithe material traps nitrogen molecules such that substantially only oxygen exits the air separator, besides a small fraction of argon. It goes without saying, that an air separator based on an OBOGS may comprise at least two zeolithe filled beds that may be subjected to air in an alternating/cycling manner. One of the beds is actively subjected to the air flow, while the inactive bed(s) may be purged by using a part of the product gas from the active bed. The advantage of an OBOGS may be the rather low necessary pressure difference over the OBOGS compared to an OBIGGS.

On the other hand, an OBIGGS comprises at least one permeable gas separation membrane, which lets nitrogen pass through and therefore primarily produces nitrogen enriched air. However, the air separation membrane requires an optimum pressure and temperature.

Still further, the air separator is based on a cryogenic air separation. In such a process inflowing air is cooled until it liquefies. Afterwards the required components are selectively distilled from the liquid air at their respective boiling temperatures. This process may be feasible in case the vehicle of interest comprises a cryogenic hydrogen tank and provides an extremely low temperature sufficient for liquefying the air. Hence, such an air separator comprises an inlet for cryogenic hydrogen and an outlet for hydrogen.

The fuel cell system according to the invention provides a number of advantages over common fuel cell systems. By using the air separator the at least one fuel cell in the fuel cell system may be operated under consumption of substantially pure oxygen and hydrogen. Due to the use of at least one low temperature fuel cell the water generated by conducting the fuel cell exits the fuel cell system in liquid form. The use of pure oxygen prevents the mixture of oxygen depleted air and water vapor such that there is no necessity to extract and condense water from a water vapor containing exhaust gas. Consequently, neither a condenser nor a water separator is necessary, such that the total weight of the fuel cell system and the required installation space are decreased. However, the fuel cell system is still able to reliably provide oxygen depleted air for fire protection and water for the use in various systems onboard the aircraft, such as lavatories, galleys, water spray systems for gas turbines or ram air channels or for any other system. Furthermore, the efficiency and the installation space requirement for the at least one fuel cell is clearly lower than for fuel cells that are supplied with air.

Due to the elimination of the condenser and the need for additional cooling capacities auxiliary cooling components, which may be required for providing cooling power in stationary use, are not necessary any more. Therefore, fans in a ram air channel, an auxiliary cooling system based on a vapor cycle or any other auxiliary cooling systems for this purpose do not need to be integrated into the aircraft, such that their weight may be saved.

Still further, the overall mechanical complexity of the fuel cell system is clearly decreased, which also results in an increased reliability and a decreased maintenance requirement. The maintenance interval may be increased and the costs for maintaining a proper operability of the fuel cell systems are as low as possible.

An advantageous embodiment comprises a compressor arranged between the air inlet and the air separator for increasing the pressure of the air supplied to the air separator. Based on the working principle of the respective air separator a more or less distinct pressure ratio between an inlet and an outlet of the air separator is necessary. The use of a compressor may substantially be helpful for operating an OBIGGS based air separator.

The compressor may be mechanically coupled to an electric motor, which in turn may be connected to the electrical power outlet of the fuel cell system. Consequently, the compactness of the fuel cell system hardly decreases and an external wiring of the compressor is not mandatory. By connecting the compressor to the electrical power outlet the compressor is operatively coupled to the fuel cell system. Since the air separator and the at least one fuel cell are only supplied with air when the fuel cell system is to be operated this is a feasible methodology to keep the complexity as low as possible.

The air separator is a cryogenic based air separator having a hydrogen inlet port, a hydrogen outlet, an air inlet port, an oxygen outlet port and an inert gas outlet port.

The hydrogen outlet port of the air separator is coupled with the hydrogen inlet port of the at least one fuel cell. Liquid hydrogen from a cryogenic hydrogen tank may be provided into the hydrogen inlet port. In the air separator, the liquid hydrogen cools the inflowing air and liquefies it. During this process, the hydrogen may vaporize and may be used in the at least one fuel cell due to its gaseous state. By combining the cooling function in the air separator and the heating function for the hydrogen a separate heating module for hydrogen, which is necessary to process the hydrogen for the use in a fuel cell, may be eliminated.

The fuel cell system may further comprise an electrical buffer connected to the electrical power outlet. The use of such an electrical buffer allows to start up and control the fuel cell system, operate the compressor, supply and exhaust valves without requiring an external power source. Once the fuel cell system runs in a normal operation state, the electrical buffer may be disconnected after being fully charged again.

Due to a tendency to use more and more direct current in an aircraft the electrical integration of the fuel cell system may only require a voltage converter, which is controlled such that the delivered output voltage is maintained at a required (common) voltage level.

The invention also relates to a method for operating a low temperature fuel cell in a vehicle. The method basically comprises the steps of delivering air to an air separator, separating the gas components of the air to oxygen and substantially nitrogen, supplying the oxygen as well as hydrogen to the at least one fuel cell and collecting water from an exhaust outlet of the fuel cell.

As explained above the at least one fuel cell only provides electrical power, heat and pure water when it is operated through pure oxygen and pure hydrogen. The method may further comprise the step of compressing air before providing it to the air separator.

Also, the method may comprise the step of delivering liquid hydrogen into the air separator under vaporizing the hydrogen, liquefying the air and separating it into oxygen and substantially nitrogen and delivering the hydrogen in a gaseous form to the at least one fuel cell.

Still further, the invention relates to an aircraft comprising at least one hydrogen tank, an air source and at least one fuel cell system as explained above. The aircraft may consequently have a clearly improved efficiency due to the low weight of the fuel cell system and the lack of additional condensers and the such.

The air source may be realized in a number of different variants. For example, an air source may be an air inlet such as an opening in the fuselage pointing into the direction of flight and subjected to ram air (ram air inlet). Also, an opening pointing in a direction substantially perpendicular to the flight direction may be possible, while the pressure of the air provided through such an inlet substantially does not depend on the speed of the aircraft, but on the altitude. For increasing the pressure of the air a compressor may be integrated. Also, a bleed air port of an engine or a tap point of an air routing component of an air cycle machine of an environmental control system may be used as an air source. Still further, the air source may be realized through cabin air or cabin exhaust air, which is extracted from the cabin through a recirculation system. As the extracted air is usually partially disposed off overboard, the re-use of extracted air from the cabin or the part of the cabin air that is to be disposed off, increases the overall efficiency of the aircraft. The amount of bleed air is thereby not increased or less increased than with using pure bleed air. By using either a bleed air port of an engine, a tap point of an air routing component of an air cycle machine or cabin exhaust air, a compressor may not be necessary. The aircraft may also comprise a plurality of different air sources for the fuel cell system according to the invention, which may be used in parallel or depending on the respective flight state the aircraft is in.

It goes without saying that the aircraft may also comprise at least one water tank, which may be coupled to a water outlet of the fuel cell system. The water tank may be coupled to a variant of different water consuming systems inside the aircraft.

Still further, the aircraft may comprise an inerting system comprising at least one inerting line connected to the inert gas outlet of the fuel cell system and to an inert gas inlet of at least one of a fuel tank and, permanently or on demand, a cargo space. Furthermore, the aircraft may also comprise an inert gas switching means that selectively connects the inert gas outlet of the fuel cell system to either a tank inerting line or a fire extinguishing agent supply line. This allows the use of the fuel cell system for fire protection or fire extinguishing if a fire danger or a fire occurs, e.g. during a flight of the aircraft. In this regard it is stated that the exhaust of the fuel cell system may be used as a supplement for another fire extinguishing agent or exclusively for extinguishing a fire. If the volume flow of generated oxygen depleted air clearly exceeds a potential leakage of the respective space it may be used for inerting or fire suppression.

Furthermore, the aircraft may comprise an oxygen system for providing oxygen to passengers in case of an emergency. The oxygen outlet of the fuel cell system may be connected to an oxygen inlet of the oxygen system such that the fuel cell system supports or completely provides the oxygen supply and may reduce or completely eliminate the necessary amount of oxygen stored on board the aircraft.

### BRIEF DESCRIPTION OF THE DRAWINGS

Further characteristics, advantages and application options of the present invention are disclosed in the following description of the exemplary embodiments in the figures. All the described and/or illustrated characteristics per se and in any combination form the subject of the invention, even irrespective of their composition in the individual claims or their interrelationships. Furthermore, identical or similar components in the figures have the same reference characters.
Fig. 1 shows a fuel cell system in a schematic view.
Fig. 2 shows an alternative air separator.
Fig. 3 shows a further fuel cell system having an electrical buffer and a control unit for controlling the operation of the fuel cell system.
Fig. 4 further shows an aircraft comprising a hydrogen tank and at least one fuel cell system according to the invention.

### DETAILLED DESCRIPTION OF EXEMPLARY EMBODIMENTS

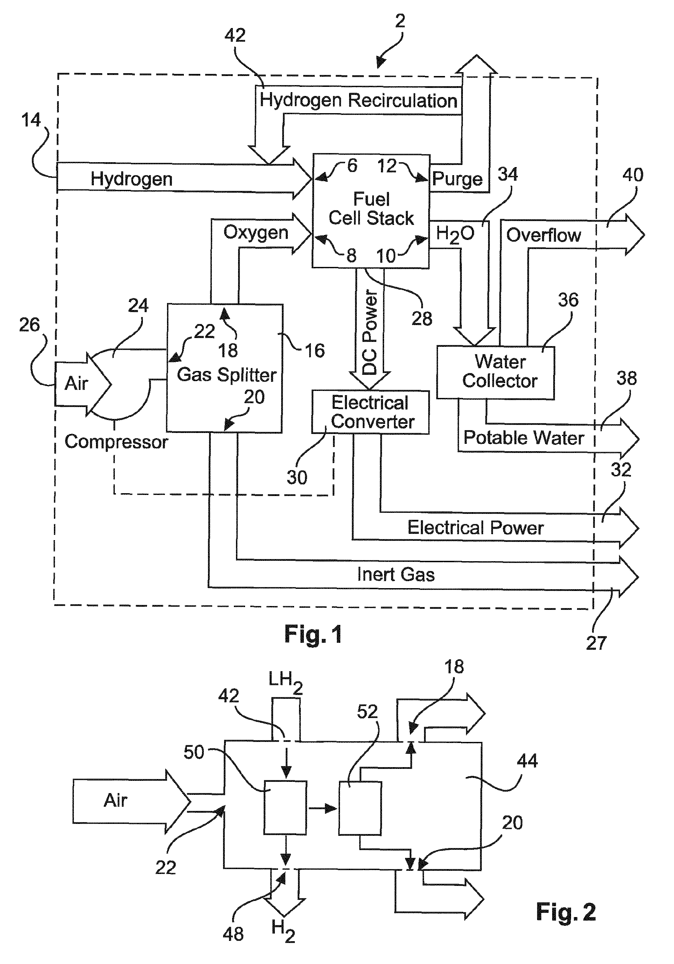

Fig. 1 shows a fuel cell system 2 according to the invention in a schematic, block-oriented view. A core component is a fuel cell stack 4 comprising a number of single low temperature fuel cells, e.g. PEM fuel cells, arranged as a stack and interconnected in a serial and/or parallel manner electrically. The fuel cell stack 4 comprises a hydrogen inlet port 6, an oxygen inlet port 8, an exhaust outlet port 10 and a purge gas outlet port 12. The hydrogen inlet port 6 is coupled with a hydrogen inlet 14 of the fuel cell system 2. However, the hydrogen inlet port 6 may also constitute the hydrogen inlet 14 itself. The oxygen inlet port 8 is coupled with an air separator 16, which comprises an oxygen outlet port 18, an inert gas outlet port 20 and an air inlet port 22. The air inlet port 22 of the air separator 16 is coupled with a compressor 24, which compresses air delivered through an air inlet 26 of the fuel cell system 2. Either through a zeolithe based air separation process by means of an OBOGS or through an air separation membrane based process by means of an OBIGGS the air separator 16 provides substantially pure oxygen at the oxygen outlet port 18 and residual, substantially inert gases at the inert gas outlet port 20. The inert gas outlet port 20 may coupled with an inert gas outlet 27 of the fuel cell system 2 or may constitute this inert gas outlet 27 itself. The inert gas delivered may be used for inerting a fuel tank or another space in the vehicle.

While being supplied with hydrogen and substantially pure oxygen the fuel cell stack 4 generates electrical power 28 which is delivered to an electrical convertor 30 aiming to maintain a required voltage level and providing it at an electrical power outlet 32.

During the fuel cell process water 34 arises at the exhaust outlet port 10 in liquid form. Hence, no condensation or extraction out of water vapor containing exhaust gas is required. A water collector 36 collects the water 34 and provides it, when required, at a water outlet 38 of the fuel cell system 2. In case the water collector 36 is full, excess water may be fed to an overflow outlet port 40 for disposal out of the vehicle.

Still further, by opening the purge outlet port 12 all fluids at the hydrogen inlet port 6 may be disposed off the fuel cell stack 4 in a cyclic manner, preventing the accumulation of fluids that may decrease the efficiency of the fuel cells. Hydrogen exiting the purge outlet port 12 may be bypassed to the hydrogen inlet port 6 through a bypass 42.

The setup of the fuel cell system 2 is clearly advantageous over common fuel cell systems integrated into vehicle and, especially, into aircraft, due to the elimination of condensers and related cooling equipment to retrieve the water arising as vapor at the exhaust outlet port 10. This clearly decreases the weight and the complexity of the fuel cell system 2 and increases the reliability and maintainability.

Fig. 2 shows another embodiment of an air separator 44, which comprises a hydrogen inlet port 42 and a hydrogen outlet port 48 for routing liquid hydrogen through an air liquefying unit 50, which is followed on by a distillation unit 52 that delivers oxygen and inert gas to the oxygen outlet port 18 and the inert gas outlet port 20. This air separator 44 may be used as an alternative to the air separator 16 or additional thereto.

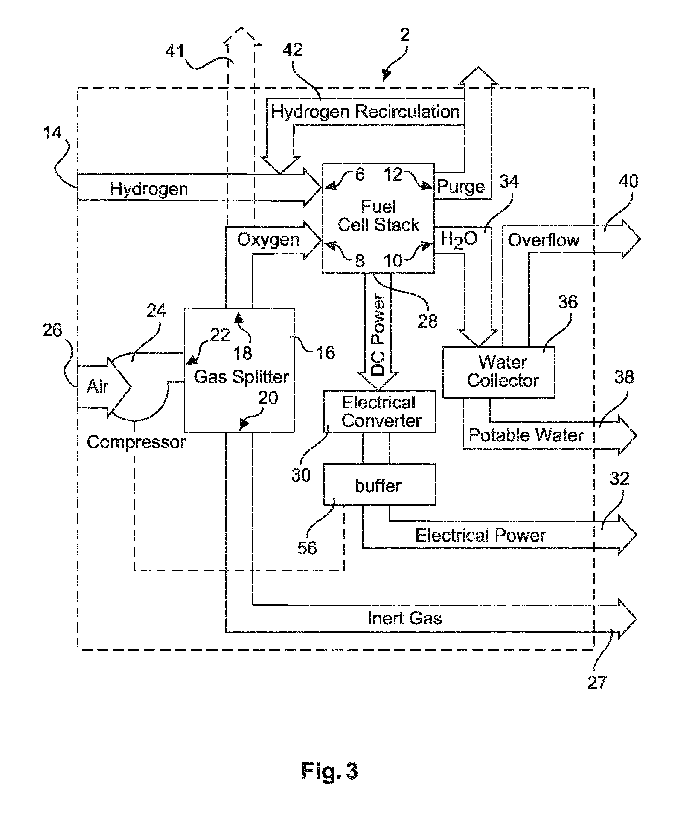

Fig. 3 shows a fuel cell system 54 which is based on the fuel cell system 2 shown in Fig. 1. Additionally, an electrical buffer 56, such as a battery, may be integrated. Supported by the electrical buffer, the startup of the fuel cell system 54 may be accomplished under consumption of stored electrical energy from the electrical buffer 56. For example, the compressor may comprise a direct electrical connection with the buffer 56. Once the fuel cell stack 4 is running in a normal operation mode it may deliver sufficient electrical energy to the compressor 24 and to a control unit which is not shown in detail in Fig. 1.

As a further detail, the fuel cell system 54 has an optional oxygen outlet 41, which may be connected to an oxygen system inside the aircraft for providing oxygen to passengers in case of an emergency. It goes without saying that the oxygen outlet 41 may also be integrated in the fuel cell system 2 of Fig. 1.

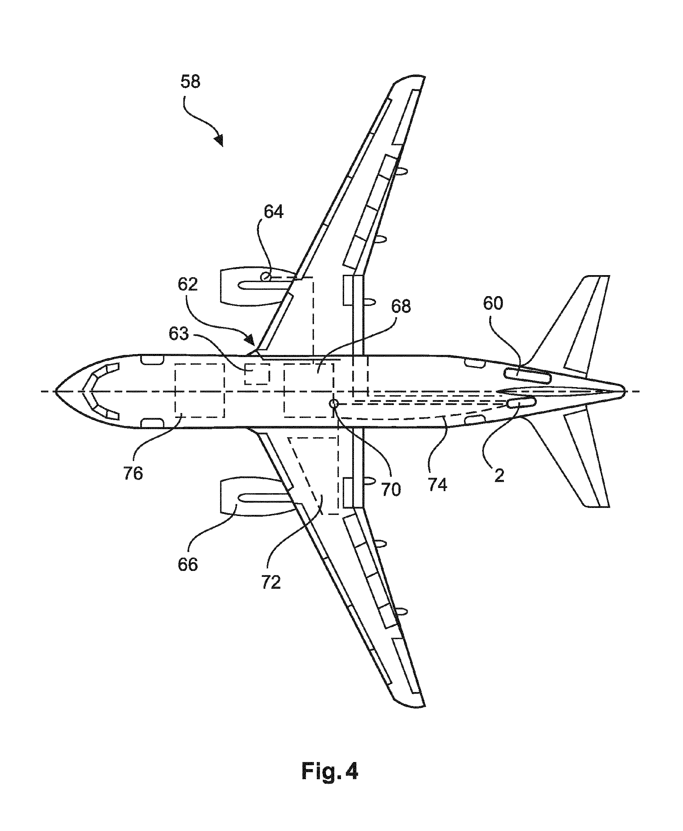

Finally, Fig. 4 shows an aircraft 58 comprising a cryogenic hydrogen tank 60 and a fuel cell system 2 according to Fig. 1. It goes without saying that the aircraft may also comprise a fuel cell system 54 shown in Fig. 3. The air inlet 26 of the fuel cell system 2 may be connected to a ram air inlet 62, an air inlet 63 exemplarily located at the bottom of the aircraft 58, or to a bleed air port 64 for tapping bleed air from a compressor stage of an engine 66.

As an alternative or additional measure the aircraft 58 may also comprise an air cycle based environmental control system 68 with a variety of pressurized air routing components, which may be tapped e.g. at a tap point 70 to provide a sufficient flow rate of air to the fuel cell system 2. This may result in the fact that intercoolers etc. are not necessary for processing bleed air from an engine 66.

Exemplarily, one fuel tank 72 of a variety of fuel tanks is shown with dashed lines. An inerting line 74 may be connected to an inert gas outlet of the fuel cell system 2 for continuously providing inert gas into the fuel tank 72, such that the risk of generating an explosive mixture of air and fuel is reduced. Furthermore, the aircraft 58 may have a cargo space 76, exemplarily shown with dashed lines indicating that the cargo space 76 may be in a bottom region of the aircraft 58, which cargo space 76 may also be connected by means of the inerting line 74 to the inert gas output of the fuel cell system 2. Here, an inert atmosphere may be generated that reduces the risk of fire in the cargo space 76. If the inert gas may be provided with a large flow rate on demand this arrangement may be considered a fire extinguishing system, which may also be useful for fire suppression after a fire has been extinguished with alternate fire extinguishing agents.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments can also be used in combination with other characteristics or steps of other exemplary embodiments described above. Reference characters in the claims are not to be interpreted as limitations.

## Claims

1. A fuel cell system (2, 54), comprising:
- an air inlet (26),
- a hydrogen inlet (14),
- an inert gas outlet (27),
- a water outlet (38),
- an electrical power outlet (32),
- at least one low temperature fuel cell (4) and
- at least one air separator (16),
wherein the air separator (16) is positioned between the air inlet (26) and a cathode of the at least one fuel cell (4),
wherein the air separator (16) is adapted for separating oxygen from air from the air inlet (26), for feeding the oxygen to the cathode of the at least one fuel cell (4) and for feeding oxygen depleted air to the inert gas outlet (27) and
wherein the at least one fuel cell (4) is adapted for providing electrical power at the electrical outlet (32) and water at the water outlet (38) under consumption of oxygen from the air separator (16) and hydrogen,
**characterized in that** the air separator (16) is a cryogenic air separator having a hydrogen inlet port (42), a hydrogen outlet port (48), an air inlet port (22), an oxygen outlet port (18) and an inert gas outlet port (20),
wherein the hydrogen outlet port (48) of the air separator (16) is coupled with the hydrogen inlet port (6) of the at least one fuel cell (4) and
wherein the hydrogen inlet port (42) of the air separator (16) is coupled to a cryogenic hydrogen tank (60).

2. The fuel cell system (2, 54) of claim 1, wherein the at least one air separator (16) comprises at least one of an OBOGS (onboard oxygen generation system) and an OBIGGS (onboard inert gas generation system).

3. The fuel cell system (2, 54) of claim 1 or 2, wherein the at least one air separator (16) comprises at least one cryogenic air separation device coupled to a cryogenic hydrogen tank.

4. The fuel cell system (2, 54) of one of the preceding claims, further comprising a compressor (24) arranged between the air inlet (26) and the air separator (16) for increasing the pressure of the air supplied to the air separator (16).

5. The fuel cell system (2, 54) of claim 4, wherein the compressor (24) is mechanically coupled to an electric motor, which is connected to the electrical power outlet (32) of the fuel cell system (2, 54).

6. The fuel cell system (2, 54) of one of the preceding claims, further comprising an electrical buffer (56) connected to the electrical power outlet (32).

7. A method for operating a low temperature fuel cell (4) in a vehicle, comprising the steps of
- delivering air from an air inlet (26) to a cryogenic air separator (16),
- separating the air substantially to oxygen and nitrogen by means of the air separator (16) by delivering liquid hydrogen into the air separator (16) under vaporizing the hydrogen, liquefying the air and separating it into oxygen and nitrogen,
- supplying the oxygen and hydrogen to the low temperature fuel cell (4),
- operating the fuel cell (4) under consumption of oxygen from the air separator (16) and hydrogen, and
- providing water at the water outlet (38) of the fuel cell (4).

8. The method of claim 7, further comprising the step of compressing air before providing it to the air separator (16).

9. An aircraft (58) comprising at least one hydrogen tank (60), an air source and at least one fuel cell system (2, 54) of one of the claims 1 to 6.

10. The aircraft of claim 9,
wherein the air source is at least one of
- a ram air inlet (62),
- an air inlet (63),
- a bleed air port (64) and
- a tap point (70) of an air routing component of an air cycle machine of an environmental control system (68) in the aircraft.

11. The aircraft (58) of claim 9 or 10, further comprising an inerting system having at least one inerting line (74) connected to the inert gas outlet of the fuel cell system (2, 54) and to an inert gas inlet of at least one of a fuel tank (72) and a cargo space (76).

12. The aircraft (58) of one of the claims 9 to 11, further comprising a fire protection system having a fire extinguishing agent supply line, which is connected to the inert gas outlet of the fuel cell system (4), wherein the fuel cell system (4) provides inert gas to the fire extinguishing agent supply line and wherein the fire protection system is configured for providing at least one of a fire suppression and fire extinguishing function.

13. The aircraft (58) of one of the claims 9 to 12, further comprising an oxygen system for providing oxygen to passengers in case of an emergency, wherein the oxygen system comprises an oxygen inlet connected to an oxygen outlet (41) of the fuel cell system (2, 54).

## Patentansprüche

1. Brennstoffzellensystem (2, 54), aufweisend:
- einen Lufteinlass (26),
- einen Wasserstoffeinlass (14),
- einen Inertgasauslass (27),
- einen Wasserauslass (38),
- einen elektrischen Leistungsausgang (32),
- mindestens eine Niedrigtemperatur-Brennstoffzelle (4) und
- mindestens einen Luftteiler (16),
wobei der Luftteiler (16) zwischen dem Lufteinlass (26) und einer Kathode der mindestens einen Brensstoffzelle (4) positioniert ist,
wobei der Lufttrenner (16) dazu ausgebildet ist, Sauerstoff aus Luft aus dem Lufteinlass (26) zu trennen, Sauerstoff an die Kathode der mindestens einen Brennstoffzelle (4) zu liefern und sauerstoffabgereicherte Luft an den Inertgasauslass (27) zu liefern und
wobei die mindestens eine Brennstoffzelle (4) dazu ausgebildet ist, elektrische Leistung an dem elektrischen Leistungsausgang (32) und Wasser an dem Wasserauslass (38) unter Verbrauch von Sauerstoff aus dem Lufttrenner (16) und Wasserstoff bereitzustellen,
**dadurch gekennzeichnet, dass** der Lufttrenner (16) ein kryogener Lufttrenner mit einem Wasserstoffeinlass (42), einem Wasserstoffauslass (48), einem Lufteinlass (22), einem Sauerstoffauslass (18) und einem Inertgasauslass (20) ist,
wobei der Wasserstoffauslass (48) des Lufttrenners (16) mit dem Wasserstoffeinlass (6) der mindestens einen Brennstoffzelle (4) gekoppelt ist und
wobei der Wasserstoffeinlass (42) des Lufttrenners (16) mit einem kryogenen Wasserstofftank (60) gekoppelt ist.

2. Brennstoffzellensystem (2, 54) nach Anspruch 1, wobei der mindestens eine Lufttrenner (16) mindestens eines eines OBOGS (Onboard Oxygen Generation System) und eines OBIGGS (Onboard Inert Gas Generation System) ist.

3. Brennstoffzellensystem (2, 54) nach Anspruch 1 oder 2, wobei der mindestens eine Lufttrenner (16) mindestens eine kryogene Lufttrennvorrichtung aufweist, die mit einem kryogenen Wasserstofftank gekoppelt ist.

4. Brennstoffzellensystem (2, 54) nach einem der vorhergehenden Ansprüche, ferner aufweisend einen Verdichter (24), der zwischen dem Lufteinlass (26) und dem Lufttrenner (16) angeordnet ist, um den Druck der dem Lufttrenner (16) bereitgestellten Luft zu erhöhen.

5. Brennstoffzellensystem (2, 54) nach Anspruch 4, wobei der Verdichter (24) mechanisch mit einem Elektromotor gekoppelt ist, der mit dem elektrischen Leistungsausgang (32) des Brennstoffzellensystems (2, 54) verbunden ist.

6. Brennstoffzellensystem (2, 54) nach einem der vorhergehenden Ansprüche, ferner aufweisend einen elektrischen Puffer (56), der mit dem elektrischen Leistungsausgang (32) verbunden ist.

7. Verfahren zum Betreiben einer Niedrigtemperatur-Brennstoffzelle (4) in einem Fahrzeug, aufweisend die Schritte
- Liefern von Luft von einem Lufteinlass (26) an einen kryogenen Lufttrenner (16),
- Trennen der Luft im Wesentlichen zu Sauerstoff und Stickstoff mittels des Lufttrenners (16) durch Liefern von flüssigem Wasserstoff in den Lufttrenner (16) unter Verdampfung des Wasserstoffs, Verflüssigung der Luft und Trennung dieser in Sauerstoff und Stickstoff,
- Bereitstellen des Sauerstoffs und des Wasserstoffs an die Niedrigtemperatur-Brennstoffzelle (4),
- Betreiben der Brennstoffzelle (4) unter Verbrauch von Sauerstoff aus dem Lufttrenner (16) und Wasserstoff, und
- Bereitstellen von Wasser an dem Wasserauslass (38) der Brennstoffzelle (4).

8. Verfahren nach Anspruch 7, ferner aufweisend den Schritt des Verdichtens von Luft, bevor diese dem Lufttrenner bereitgestellt wird.

9. Flugzeug (58), aufweisend mindestens einen Wasserstofftank (60), eine Luftquelle und mindestens ein Brennstoffzellensystem (2, 54) nach einem der Ansprüche 1 bis 6.

10. Flugzeug nach Anspruch 9,
wobei die Luftquelle mindestens eine von folgenden ist:
- ein Staulufteinlass (62),
- ein Lufteinlass (6),
- ein Zapfluftanschluss (64) und
- eine Zapfstelle (70) einer luftleitenden Komponente einer Luftkreislaufmaschine eines Klimatisierungssystems (68) des Flugzeugs.

11. Flugzeug (58) nach Anspruch 9 oder 10, ferner aufweisend ein Inertisierungssystem mit mindestens einer Inertisierungsleitung (74), die mit dem Inertgasauslass des Brennstoffzellensystems (2, 54) und mit einem Inertgaseinlass mindestens eines eines Brennstofftanks (72) und eines Frachtraums (76) verbunden ist.

12. Flugzeug (58) nach einem der Ansprüche 9 bis 11, ferner aufweisend ein Feuerschutzsystem mit einer Feuerlöschmittelzufuhrleitung, die mit dem Inertgasauslass des Brennstoffzellensystems (4) verbunden ist, wobei das Brennstoffzellensystem (4) der Feuerlöschmittelzufuhrleitung Inertgas bereitstellt und wobei das Feuerschutzsystem konfiguriert ist, mindestens eines einer Feuerunterdrückungsfunktion und einer Feuerlöschfunktion bereitzustellen.

13. Flugzeug (58) nach einem der Ansprüche 9 bis 12, ferner aufweisend ein Sauerstoffsystem zum Bereitstellen von Sauerstoff an Passagiere in einem Notfall, wobei das Sauerstoffsystem einen Sauerstoffeinlass aufweist, der mit einem Sauerstoffauslass (41) des Brennstoffzellensystems (2, 54) verbunden ist.

## Revendications

1. Système de pile à combustible (2, 54) comprenant :
- une entrée d'air (26),
- une entrée d'hydrogène (14),
- une sortie de gaz inerte (27),
- une sortie d'eau (38),
- une prise de courant (32),
- au moins une pile à combustible à basse température (4) et
- au moins un séparateur d'air (16),
dans lequel le séparateur d'air (16) est positionné entre l'entrée d'air (26) et une cathode de ladite au moins une pile à combustible (4),
dans lequel le séparateur d'air (16) est conçu pour séparer l'oxygène de l'air provenant de l'entrée d'air (26), pour acheminer l'oxygène vers la cathode de ladite au moins une pile à combustible (4) et pour acheminer l'air appauvri en oxygène vers la sortie de gaz inerte (27) et
dans lequel ladite au moins une pile à combustible (4) est conçue pour fournir de l'énergie électrique à la prise de courant (32) et de l'eau à la sortie d'eau (38) moyennant la consommation d'oxygène provenant du séparateur d'air (16) et d'hydrogène,
**caractérisé en ce que** le séparateur d'air (16) est un séparateur d'air cryogénique présentant un orifice d'entrée d'hydrogène (42), un orifice de sortie d'hydrogène (48), un orifice d'entrée d'air (22), un orifice de sortie d'oxygène (18) et un orifice de sortie de gaz inerte (20),
dans lequel l'orifice de sortie d'hydrogène (48) du séparateur d'air (16) est accouplé à l'orifice d'entrée d'hydrogène (6) de ladite au moins une pile à combustible (4) et dans lequel l'orifice d'entrée d'hydrogène (42) du séparateur d'air (16) est accouplé à un réservoir d'hydrogène cryogénique (60).

2. Système de pile à combustible (2, 54) selon la revendication 1, dans lequel ledit au moins un séparateur d'air (16) comprend au moins un système embarqué de génération d'oxygène (onboard oxygen generation system - OBOGS) ou un système embarqué de génération de gaz inerte (onboard inert gas generation system - OBIGGS).

3. Système de pile à combustible (2, 54) selon la revendication 1 ou 2, dans lequel ledit au moins un séparateur d'air (16) comprend au moins un dispositif de séparation d'air cryogénique accouplé à un réservoir d'hydrogène cryogénique.

4. Système de pile à combustible (2, 54) selon l'une quelconque des revendications précédentes, comprenant en outre un compresseur (24) disposé entre l'entrée d'air (26) et le séparateur d'air (16) pour accroître la pression de l'air fourni au séparateur d'air (16).

5. Système de pile à combustible (2, 54) selon la revendication 4, dans lequel le compresseur (24) est mécaniquement accouplé à un moteur électrique qui est raccordé à la prise de courant (32) du système de pile à combustible (2, 54).

6. Système de pile à combustible (2, 54) selon l'une quelconque des revendications précédentes, comprenant en outre un tampon électrique (56) raccordé à la prise de courant (32).

7. Procédé pour faire fonctionner une pile à combustible à basse température (4) dans un véhicule, comprenant les étapes consistant à :
- envoyer l'air provenant d'une entrée d'air (26) à un séparateur d'air cryogénique (16),
- séparer l'air sensiblement en oxygène et en azote au moyen du séparateur d'air (16) en envoyant de l'hydrogène liquide dans le séparateur d'air (16) moyennant la vaporisation de l'hydrogène, la liquéfaction de l'air et sa séparation en oxygène et en azote,
- fournir l'oxygène et l'hydrogène à la pile à combustible à basse température (4),
- faire fonctionner la pile à combustible (4) moyennant la consommation d'oxygène provenant du séparateur d'air (16) et d'hydrogène, et
- fournir de l'eau à la sortie d'eau (38) de la pile à combustible (4).

8. Procédé selon la revendication 7, comprenant en outre l'étape consistant à comprimer l'air avant de le fournir au séparateur d'air (16).

9. Aéronef (58) comprenant au moins un réservoir d'hydrogène (60), une source d'air et au moins un système de pile à combustible (2, 54) selon l'une des revendications 1 à 6.

10. Aéronef selon la revendication 9,
dans lequel la source d'air est au moins un(e) parmi :
- une entrée d'air dynamique (62),
- une entrée d'air (63),
- un orifice de prélèvement d'air (64) et
- un point de prise d'air (70) d'élément d'acheminement d'air de groupe turborefroidisseur d'un système de conditionnement d'air (68) de l'aéronef.

11. Aéronef (58) selon la revendication 9 ou 10, comprenant en outre un système d'inertage comportant au moins une conduite d'inertage (74) raccordée à la sortie de gaz inerte du système de pile à combustible (2, 54) et à une entrée de gaz inerte d'au moins un réservoir de carburant (72) ou d'une soute (76).

12. Aéronef (58) selon l'une quelconque des revendications 9 à 11, comprenant en outre un système de protection incendie comportant une conduite d'alimentation en agent extincteur qui est raccordée à la sortie de gaz inerte du système de pile à combustible (2, 54), dans lequel le système de pile à combustible (2, 54) fournit du gaz inerte à la conduite d'alimentation en agent extincteur et dans lequel le système de protection incendie est conçu pour assurer au moins une fonction de lutte contre les incendies ou d'extinction d'incendie.

13. Aéronef (58) selon l'une quelconque des revendications 9 à 12, comprenant en outre un circuit d'oxygène destiné à fournir de l'oxygène à des passagers, en cas d'urgence, dans lequel le circuit d'oxygène comprend une entrée d'oxygène raccordée à une sortie d'oxygène (41) du système de pile à combustible (2, 54).
